# EUROPEAN PATENT APPLICATION

(11) **EP 4 571 139 A1**
(43) Date of publication of application: **18.06.2025**
(21) Application number: 24218600.5
(22) Date of filing: 10.12.2024
(51) Int. Cl.: F16D 3/72, F16D 3/74

(54) **JOINT**

(30) Priority: 12.12.2023 IT 202300026505
(71) Applicant: SIT S.P.A., 20090 Cusago (MI) (IT)
(72) Inventor: GESSI, Giovanni, 20090 CUSAGO (MI) (IT)
(74) Representative: Marietti, Andrea

(57) **Abstract**

A transmission joint (100) for transmitting motion between two rotating shafts is described, comprising two hubs (10, 20) and at least one connecting element (30) between the two hubs (10, 20), said connecting element (30) comprising a body (32) and two end portions (31) protruding from said body (32) and arranged opposite one another with respect to said body (32), wherein each of said two hubs (10, 20) comprises at least one circumferential seat (50) facing said connecting element (30) and adapted for accommodating one of said end portions (31) of said connecting element (30) therein, wherein each of said hubs (10, 20) comprises at least one threaded hole (41), a recess (54) formed in said circumferential seat (50) and arranged at said threaded hole (41), said joint (100) comprising a screw-shaped element (60) couplable to said threaded hole (41) so that the insertion of said screw-shaped element (60) into said threaded hole (41) causes a deformation of said end portion (31) inside said recess (54), so as to make said connecting element (30) rotate integrally to said hubs (10, 20).

## Description

### Technical Field of the Invention

The present invention generally concerns a joint for transmitting motion between two rotating shafts and, in particular, a joint provided with a couple of hubs joined by a typically flexible and/or elastically deformable connecting element.

### Technical Background of the Invention

These types of joints are used for connecting two shafts, for example a drive shaft and a driven shaft, in order to allow the transmission of motion by simultaneously allowing constant or variable small relative displacements. In other words, the joints of this type are used for coupling rotating shafts with axes that are not perfectly aligned, for example shafts which do not have a perfect axial or radial angular alignment. The possibility of performing such relative movement is typically entrusted to the presence of a connecting element, for example a connecting element made in the form of a bellow or a helical band member with one or multiple thread start (see for example the joint models "Single Beam," "Multi Beam" and "Step Beam" produced by the company Huco Dynatork, USA). The connecting element can be made of metal material or also in the form of an element made of elastomers that may be reinforced.

The connecting element is connected integrally at its ends to a couple of hubs intended for being mounted on respective shafts. The hubs can have, for example, a central axial hole and a fastening system of the clamp type or can have an outer shank possibly provided with an expansion system for being fastened to shafts or perforated rotating members.

In the case of connecting elements made of metal material, for example steel or the like, the connection between hubs and elastic element is, for example, performed by wire welding, arc welding in a protective atmosphere (TIG or MIG for example), gluing or other similar process able to ensure the necessary resistance to torsional stresses.

One of the main issues in constructing such types of joints consists in that the shafts to be connected can be of different type and/or diameter. Since manufacturers are generally provided with ready-made joints with identical hubs of standard type, special joints intended for connecting shafts of different shape and/or size must be made upon request. For example, in the case where the joint must be provided with hubs with holes of different diameters, it is difficult, if not impossible, to change the diameter of the hole of one of the two hubs in an already completed j oint since, in addition to making it difficult to lock the completed j oint when widening one or both of the holes of the two hubs, the vibrations transmitted during this operation may compromise the integrity of the connecting element and/or the welds between hubs and elastic element.

Moreover, the preparation of a special joint upon request anyhow involves greater processing times and costs than mass production, and anyhow such as to be unacceptable if significant amounts of these particular joints are requested.

In the case of joints with perforated hubs, the known art provides, for example, for the use of adapter rings between the hole of the hub and the shaft on which one of the two hubs must be keyed. This solution is however little reliable and may not be possible if great torsional stresses must be transmitted. Moreover, the possible formation of corrosion due to friction between the various surfaces reciprocally in contact with one another could result in undesired welding of the adapter to the shaft and/or hub, therefore compromising the possibility to take down the joint without causing damages to the shafts and/or j oint.

International application n. WO 99/47827 suggests to directly fasten the metal bellow-shaped element on the shafts to be connected and to lock it in position by means of a couple of clamp-shaped locking elements. However, in order to connect shafts of different diameters, it would be necessary to have a considerable variety of flexible elements of different end diameters appropriate for satisfying the most various needs. Moreover, also in this case, damages can occur to the shafts in the event of corrosion due to friction in the coupling between the surfaces of the bellow and the shaft. Application EP2102519A1 in the name of the Applicant teaches to make the coupling between the hubs and the connecting element by means of cooperation between screw-shaped tightening elements and inserts having a cam surface. Such implementation is particularly effective but economically expensive.

### Summary of the Invention

Object of the present invention is to provide a particularly versatile joint which can be adapted to the most various connecting needs between shafts of different shape and size. Another object of the present invention is to provide a particularly reliable joint also able to resist to great torsional stresses.

Still, another object of the present invention is to suggest a joint which allows to limit production and assembly times and costs not only in the event of standard joints, but also in the event of special joints.

A further object of the present invention is to provide a joint which allows to be easily mounted and taken down without damaging the shafts connected.

These objects are achieved by the present invention according to one or more of the accompanying claims and aspects discussed herein.

Particular object of the present invention is a joint according to the independent claim, whereas preferred aspects are set forth in the dependent claims.

According to an aspect of the invention, a joint for transmitting motion between two rotating shafts comprises two hubs and at least one connecting element between the two hubs. The connecting element comprises a body and two end portions protruding from the body and arranged opposite one another with respect to the body. Each of the two hubs comprises at least one circumferential seat facing the connecting element and adapted for accommodating one of the end portions of the connecting element therein. Each of the hubs comprises at least one threaded hole forming an opening on a first wall of the circumferential seat. The circumferential seat comprises a second wall opposite the first wall, so that, in use, said end portion is interposed between the first wall and the second wall. The second wall comprises or forms a countering element. The joint further comprises a screw-shaped element couplable to the threaded hole, so that the insertion of the screw-shaped element into the threaded hole causes a deformation of the respective end portion of the connecting element towards the countering element, until the end portion contacts the countering element, so as to make the connecting element rotate integrally to the hubs.

Such solution is simple to manufacture, since the coupling between connecting element and hubs is performed by means of one or more screw-shaped elements, without interposing third elements, and since it does not require the end portions of the connecting element to have a particular shape.

According to a preferred aspect, the connecting element comprises a bellow-shaped body. Generally, the connecting element is shaped so as to be flexible and/or elastically deformable. In particular, in a way known to the technician of the field, the connecting element has material and/or shape such that, in use condition, the connecting element rotates integrally to the hubs but allows greater deformation than the hubs at a stress having a component perpendicular to the rotation axis of one of the two hubs. The body (and generally also the end portions made in one piece with the body) of the connecting element preferably consists of two or more metal foils, typically overlapping and preferably having thickness of between 0.1 and 0.5 mm.

The countering element can therefore be made in the second wall, typically in the shape of a recess formed in the second wall. In alternative embodiments, the second wall acts like a countering element.

Generally, according to a preferred aspect, at least part of the countering element is inclined with respect to the rotation axis of the respective hub, so that a plane perpendicular to the rotation axis of the hub and passing through said screw-shaped element is not perpendicular to the countering element. As discussed, in preferred embodiments, the recess therefore has at least one inclined surface with respect to the rotation axis of the hub; in other embodiments, the second wall is itself inclined with respect to the axis of the hub and itself acts like a countering element.

According to an aspect of the invention, the at least one threaded hole is radial with respect to the respective hub.

In preferred embodiments, there are a plurality of threaded holes and screw-shaped elements, so that the insertion of the screw-shaped elements into the respective threaded holes causes a deformation of an end portion towards corresponding countering elements, so as to constrain to each other each end portion of the connecting element to the corresponding hub at more points.

According to an aspect of the invention, the circumferential seats are of equal shape and size in both hubs.

The end portions are preferably shaped like hollow cylinders.

According to an aspect of the invention, the end portions of the connecting elements are of equal shape and size.

Thanks to this, it is possible to make identical hubs and connecting elements for all types of joints having standard dimensional and mechanical characteristics, which differ only in the diameter of the axial hole for being keyed on a shaft and/or in the type of connection to each of the two shafts.

It is therefore particularly simple to make a transmission joint, not only in cases where the joint must connect shafts of the same diameter but also and especially in cases where the joint must connect shafts of different diameters or types.

The stocks of parts to be kept in the warehouse to satisfy all the possible customer requests are rationalized. Moreover, the assembly of the joint can easily be made on the installation site, therefore also allowing buyers to keep a limited number of replacement parts adaptable for all types of joints installed at their plant.

According to a possible aspect, the screw-shaped tightening means comprise a plurality of screws, for example headless screws, engaged in corresponding threaded holes intersecting the circumferential seat of each of the hubs.

### Brief Description of the Drawings

These and other advantages will become clearer in the following description made by way of example and without limitations, with reference to the accompanying drawings, in which:

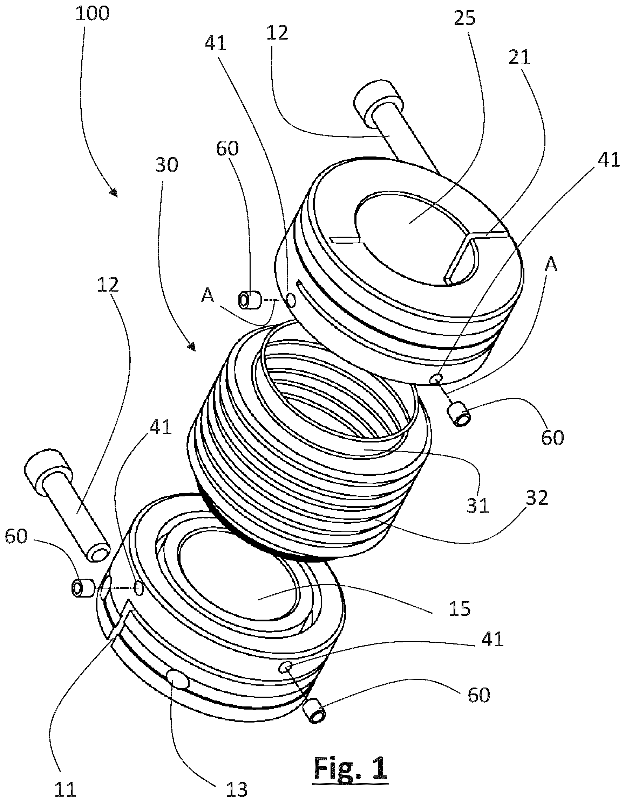

- Figure 1 is an exploded perspective view of a transmission joint according to a possible embodiment of the present invention;
- Figure 2A is a sectional view of the transmission joint of figure 1, in the step of inserting the screw-shaped elements into the threaded holes;
- figure 2B is a view similar to that of figure 2A, in which the screw-shaped elements are inserted into the threaded holes, so as to deform the corresponding end portion of the connecting element in respective recesses;
- Figures 3A and 3B are enlarged views of the details of figures 2A and 2B and a more detailed enlarged view of a detail of Figure 2;
- figures 4A and 4B are views similar to those of figures 3A and 3B, relating to an embodiment alternative to that of figures 3A and 3B.

### Modes of Implementing the Invention

A transmission joint 100 according to a first embodiment of the present invention comprises a couple of perforated hubs 10 and 20. Such perforated hubs 10, 20 have, in a known way, means for being connected to respective shafts. In some preferred embodiments, the perforated hubs are shaped for an assembly of the clamp type, i.e. the hubs provided with slits 11 and 21 allow them to be keyed on the respective shafts (not shown) by acting on tightening screws 12 inserted into appropriate threaded holes 13. The hubs 10 and 20 are typically provided with respective central axial holes 15 and 25 to allow them to be mounted on respective shafts. Such central holes can be of equal diameter, such as in the embodiment shown or can be different from one another, so as to connect to each other shafts of different diameters.

In alternative embodiments, other connecting methods between hubs and shafts can be used in replacement of the holes 15, 25. For example, hubs which are not axially perforated could be provided with shanks and possible expansion portions, or the like, for connecting them with shafts.

A connecting element 30 is coupled to the hubs 10, 20.

The connecting element 30 is typically made of metal. The connecting element has two end portions 31 arranged distal from one another with respect to a body 32.

At least the body 32 of the connecting element 30 is typically flexible and/or elastically deformable, so as to compensate for a misalignment between the shafts to which the joint is constrained.

In preferred embodiments, such as the one shown in the figures, the body 32 is bellow-shaped. The body 32, in particular in its bellow shape, is typically formed by means of two or more metal foils, preferably made of stainless steel, having a thickness between 0.1 and 0.5 mm.

The end portions 31 are preferably shaped like hollow cylinders, preferably without folded portions or flanges at the free ends of the end portions.

The end portions 31 are preferably made like thin bodies, i.e. thin in thickness, such as for example appropriately shaped metal sheets, preferably shaped like a hollow cylinder, i.e. ring-shaped.

The end portions 31 are preferably made of stainless steel. The end portions 31 and the body 32 are generally made of the same material and preferably are of the same thickness.

In particular, according to a preferred embodiment, the body 32 is formed by means of plastic deformation of two or more metal foils (typically two) overlapping one another and welded to form a tube and then deformed so as to centrally form the bellow-shaped body, while the ends of the tube stay undeformed, so as to define the end portions 31. As discussed, the foils are preferably made of stainless steel.

Each hub comprises a circumferential seat 50 into which one of the end portions 31 of the connecting element 30 can be inserted.

The circumferential seats 50 of the two hubs 10, 20 preferably are equal in shape and size, also in the case of central holes 15, 25 differing from one another, just as the end portions 31 of the connecting element 30 are equal in shape and size.

The circumferential seat 50 is preferably formed by a groove delimited by a first wall 51 and by a second wall 52 opposite the first wall 51. Such walls are arranged so that, in use, an end portion 31 is inserted into and interposed between the first wall 51 and the second wall 52.

The first wall 51 is typically arranged axially with respect to the axis R of the hub.

The circumferential seat 50 typically further has a bottom wall 54 generally arranged in radial direction with respect to the rotation axis R of the respective hub 10, 20, considered in use condition, connecting the first wall 51 to the second wall 52.

The circumferential seats 50 are provided with countering elements 54a, 54b against which the end portion 31 is deformable.

Such countering element 54a, 54b can be comprised in the second wall 52 or the second wall 52 (or anyhow a portion thereof) can act like a countering element 54a, 54b.

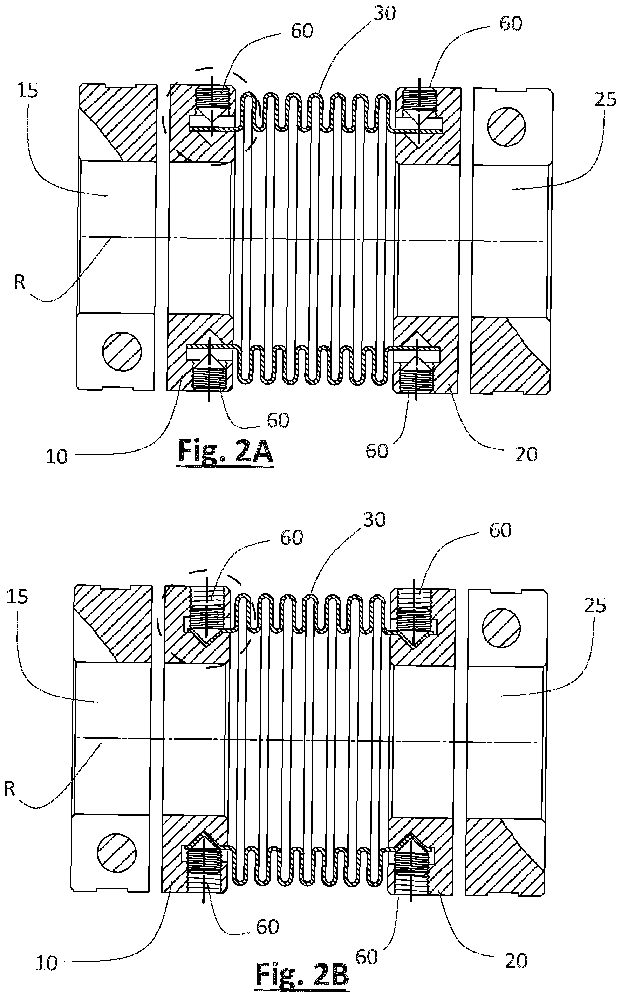

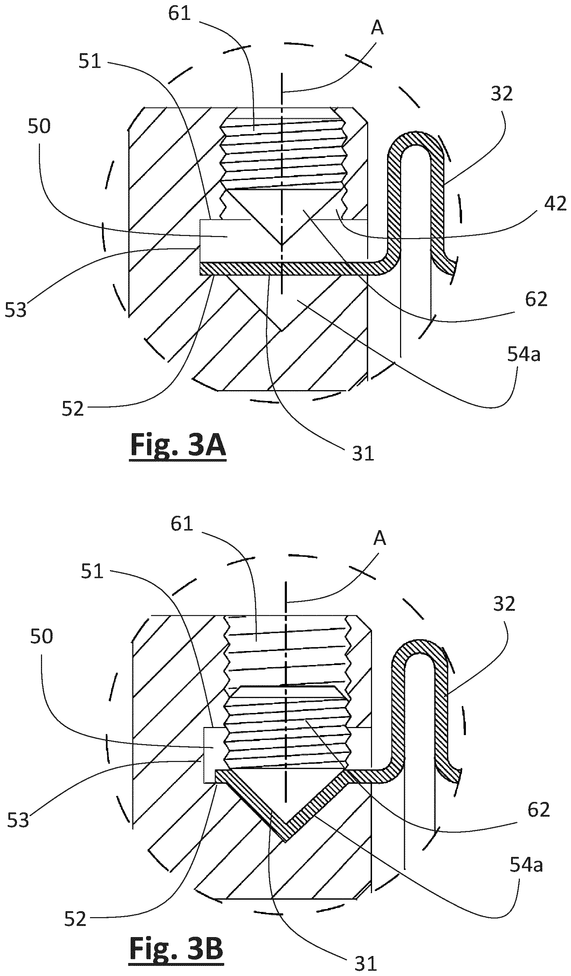

According to a possible solution, such as in figures 2A - 3B, the countering elements are recesses 54a formed in the second surface 52 of the circumferential seat 50.

The recesses 54a are preferably truncated-cone shaped with a V or U-shaped section and are sized such as to at least partly house a deformed length of the end portion 31.

In such embodiments, the second wall 52, except at the respective recess 54a, is preferably axial with respect to the rotation axis R of the hub, and therefore parallel to the first wall 50. The thickness of the circumferential seat 50, measured radially to the axis R, recesses excluded, is therefore constant and substantially forms a cylindrical crown, i.e. has a constant annulus-shaped section.

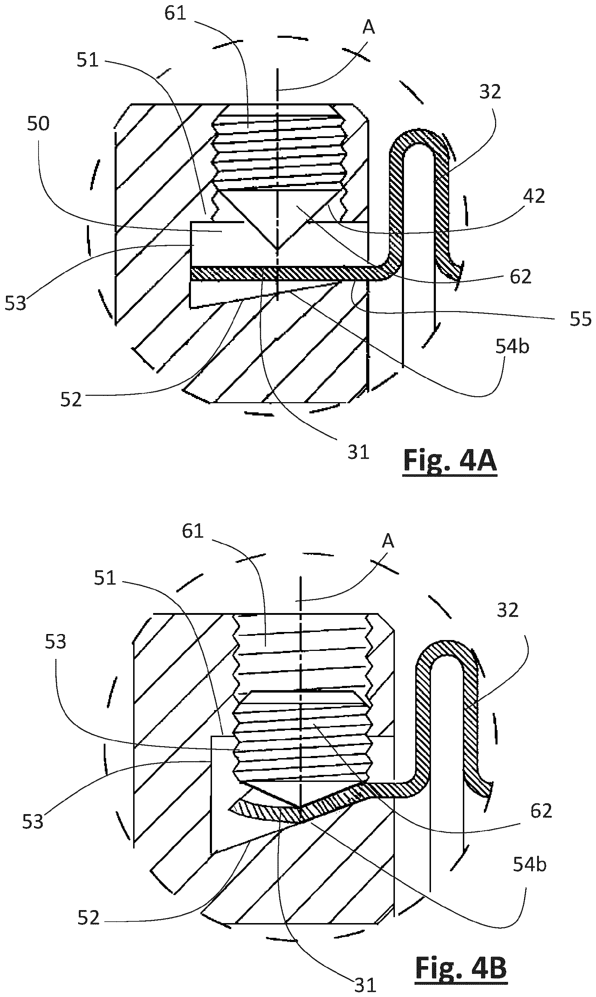

According to an alternative solution, such as the one of figures 4A and 4B, the second wall 52, or at least a portion 54b thereof, directly acts like a countering element. A supporting wall 55, typically axial with respect to the axis R of the hub, can be provided at the entry of the seat 50, opposite the first wall 51, and typically connected to the second wall 52.

Generally, at the second wall 52, the thickness of the seat 50, measured radially to the axis R of the hub, is progressively increasing.

Generally, according to a preferred aspect, at least part of the countering element 54a, 54b is inclined, i.e. is not arranged axially with respect to the axis R of the hub. In other words, considering a plane perpendicular to the axis R of the hub which crosses the countering element 54a, 54b, the countering element is not perpendicular to such plane.

With reference to the two preferred solutions discussed above, the recess 54a typically has at least one non-axial surface, or the portion 54b of the second wall 52 is not arranged axially, with respect to the axis R of the hub 10, 20.

Each hub comprises one or more threaded holes 41 forming an opening 41 on the first wall 51, facing the second wall 52, at a respective countering element 54a, 54b.

The threaded holes 41 are typically formed with a radial axis inside each hub 10, 20 with respect to the rotation axis R of the respective hub 10, 20.

Multiple threaded holes 41 (and therefore multiple recesses 31), typically arranged angularly equidistant from one another, are preferably present. For example, in the embodiment illustrated herein, four holes 41 are provided on each hub, diametrically opposed in pairs, along two reciprocally perpendicular axes A.

Screw-shaped elements 60 can be screwed into the threaded holes 41, so as to locally deform (i.e. push) the end portion 31 towards the countering element 54a, 54b, until the countering element 54a, 54 contacts the end portion 31.

The screw-shaped elements 60 typically have a threaded body 61 and an end 62 adapted for contacting the end portion 31 of the connecting element 30. The screw shaped element 60 is typically headless, i.e. does not have a portion distal from the end 62 of greater size than the threaded body 61.

The end 62 is preferably pointy, typically conical or truncated-cone shaped, and preferably has a shape complementary to the recess 54a or to a surface which, in use, is substantially parallel to the portion 54b of the second wall 52 acting like countering element. The end 62 can anyhow assume different shapes and could simply be the end of the threaded body 61.

This way, by screwing the screw-shaped elements 60, the pressure exerted by the screw-shaped elements 60 locally deforms the end portion 31 towards the countering element 54a, 54 until contacting one another, therefore allowing the transmission of forces between hub 10, 20 and connecting element 30 both in radial direction and axial direction, therefore firmly fastening the two components to one another.

The local deformation of the end portion 31 towards and against the countering element 54a, 54b can be of the elastic type, i.e. permanent, although not of an excessive extent, so that the transmission of the motion from the respective hub 10, 20 to the end portion 31 of the connecting element 30 occurs thanks to the coupling of the deformed walls of the end portion 31 against the countering element 54a, 54b and also thanks to the coupling of such deformed walls of the end portion 31 with at least the tip of the respective screw-shaped element 60.

In addition to allowing safe and reliable fastening, the constraint between the connecting element 30 and hubs 10, 20 can also be loosened, if needed, by unscrewing the screw-shaped elements 60, without causing any damage to the shafts on which the hubs 10, 20 are keyed.

As discussed, the material constituting the end portions 31 of the connecting element 30 is preferably a metal material, such as for example stainless steel, and the size, in particular the thickness, of such end portions 31 is such as to allow the aforesaid local deformations at the countering element 54a, 54b.

For the assembly, each end portion 31 of the connecting element 30 is therefore inserted into the circumferential seat 50 of the respective hub 10, 20.

Screw-shaped elements 60 are screwed into the threaded holes 41. During its path, the screw-shaped element protrudes from the threaded hole 41 until reaching the end portion 31. While being screwed, the screw-shaped element 60 locally deforms the end portion 31 towards and against the respective countering element, for example inside the recess 54a or against the second wall 52, thus making the end portion 31 (and therefore the connecting element 30) integral to the hub 10, 20.

## Claims

1. Transmission joint (100) for transmitting motion between two rotating shafts, comprising two hubs (10, 20) and at least one connecting element (30) between the two hubs (10, 20), said connecting element (30) comprising a body (32) and two end portions (31) protruding from said body (32) and arranged opposite one another with respect to said body (32), wherein each of said two hubs (10, 20) comprises at least one circumferential seat (50) facing said connecting element (30) and adapted for accommodating one of said end portions (31) of said connecting element (30) therein, wherein each of said hubs (10, 20) comprises at least one threaded hole (41), said threaded hole (41) forming an opening (42) on a first wall (54a; 54b) of said circumferential seat, said circumferential seat comprising a second wall (52) opposite said first wall (54a; 54b), so that, in use, said end portion is interposed between said first wall and said second wall, said second wall comprising or forming a countering element (54a; 54b), said joint (100) comprising a screw-shaped element (60) couplable to said threaded hole (41), so that the insertion of said screw-shaped element (60) into said threaded hole (41) causes a deformation of said end portion (31) towards said countering element (54a; 54b) until said end portion (31) contacts said countering element (54a; 54b), so as to make said connecting element (30) rotate integrally to said hubs (10, 20).

2. Transmission joint (100) according to claim 1, wherein said body of said connecting element (30) is bellow-shaped, preferably said body of said connecting element consisting of two or more metal foils, typically overlapping and preferably having a thickness between 0,1 and 0,5 mm.

3. Transmission joint (100) according to claim 1 or 2, wherein said countering element is a recess formed in said second wall or wherein said second wall acts like a countering element (54a; 54b).

4. Transmission joint (100) according to one of the preceding claims, wherein at least part of said countering element is inclined with respect to the rotation axis of the respective hub (10, 20), so that a plane perpendicular to the rotation axis of the hub and passing through said screw-shaped element is not perpendicular to said countering element (54a; 54b).

5. Transmission joint (100) according to one of the preceding claims, wherein said threaded hole (41) is radial with respect to the respective hub (10, 20).

6. Transmission joint (100) according to one of the preceding claims, wherein said end portions (31) are shaped like hollow cylinders.

7. Transmission joint (100) according to one of the preceding claims, where said circumferential seats (50) are of equal shape and size in both said hubs (10, 20).

8. Transmission joint (100) according to one of the preceding claims, wherein the end portions (31) of said connecting element (30) are of equal shape and size.

9. Transmission joint (100) according to one of the preceding claims, comprising a plurality of threaded holes (41), recesses (54) and screw-shaped elements (60), each screw-shaped element (60) being couplable to a respective threaded hole (41), so that the insertion of each screw-shaped element (60) into the respective threaded hole (41) causes a deformation of said end portion (31) inside a corresponding recess (54), so as to make said connecting element (30) rotate integrally to said hubs (10, 20).
